## Europäisches Patentamt
## European Patent Office
## Office européen des brevets

(19)

(11) Numéro de publication: **0 262 035 B1**

(12)

# FASCICULE DE BREVET EUROPEEN

(45) Date de publication du fascicule du brevet:
08.08.90

(21) Numéro de dépôt: 87402087.8

(22) Date de dépôt: 18.09.87

(51) Int. Cl.⁵: **B61D 5/00,** B61D 7/02,
B60P 3/22

(54) Réceptacle de stockage et de transport pourvu à sa base d'au moins une trémie de déchargement.

(30) Priorité: 26.09.86 FR 8613899

(43) Date de publication de la demande:
30.03.88 Bulletin 88/13

(45) Mention de la délivrance du brevet:
08.08.90 Bulletin 90/32

(84) Etats contractants désignés:
AT BE CH DE ES FR GB IT LI LU NL

(56) Documents cités:
CH-A- 408 989
FR-A- 1 585 873
GB-A- 955 605
US-A- 4 484 527

(73) Titulaire: ARBEL FAUVET RAIL S.A., 194 rue Faidherbe,
F-59500 Douai(FR)

(72) Inventeur: Cardon, Christian, 34 rue de Thélus
Roclaincourt, F-62223 Saint Laurent Blangy(FR)

(74) Mandataire: Ecrepont, Robert, CABINET ECREPONT
ROBERT 12, Place Simon Vollant, F-59800 Lille(FR)

ACTORUM AG

## Description

L'invention se rapporte à un réceptacle de stockage et de transport pourvu à sa base d'au moins une trémie de déchargement.

Plus particulièrement mais non exclusivement elle se rapporte aux citernes de véhicules ainsi qu'aux véhicules pourvus d'au moins un tel réceptacle et notamment aux wagons-citernes.

Les wagons-citernes comprennent généralement deux boggies qui, via un châssis ou des structures de liaison, portent un réceptacle dit citerne dont le corps, dans sa partie essentielle, a une forme générale cylindrique d'axe horizontal, fermé à ses extrémités par des calottes bombées, par exemple sensiblement hémisphériques, donnant au corps une section horizontale de forme oblongue dont l'axe longitudinal est généralement parallèle à la direction de déplacement du véhicule.

Pour le déchargement de cette citerne, à la base du corps est raccordée au moins une trémie canalisant le produit jusqu'à son orifice de sortie, par lequel la trémie est elle-même raccordée à une canalisation de vidange.

Pour assurer un écoulement par gravité des produits, les trémies ont à ce jour une forme évasée vers le haut, exclusivement conique ou pyramidale, très légèrement tronquée, dont la partie la plus large, située à la partie supérieure de la trémie, se raccorde au corps de la citerne tandis que la partie la plus étroite, située du côté de l'orifice de sortie, a dans un plan horizontal, une section sensiblement identique à celle de la canalisation de vidange.

Pour assurer un tel écoulement par gravité de produits pulvérulents variés en nature et en granulométrie, l'homme de l'art sait qu'il faut donner à toutes les génératrices de la paroi d'une trémie une pente d'au moins cinquante degré environ, ce qui confère aux trémies une forme très pointue et une hauteur importante presque égale à la dimension de leur partie la plus large.

La limitation de la hauteur exige alors celle de la largeur de la partie supérieure de la trémie et celle-ci implique, pour équiper une citerne, de prévoir un nombre plus important de trémies avec leurs moyens de vidange, ce qui évidemment augmente le coût de fabrication et de maintenance.

Quoiqu'il en soit, malgré leur grande hauteur, les trémies ont du fait de leur forme pointue, une faible capacité et de ce fait rendent la partie inférieure du véhicule pratiquement inutilisable pour stocker le produit.

Or, pour limiter le nombre de citernes nécessaires à un transport, l'augmentation de la capacité d'une citerne ne peut généralement être acquise autrement que par l'emploi judicieux de toute la hauteur disponible.

En effet une augmentation d'au moins l'une des dimensions transversale et longitudinale de la citerne ne peut s'envisager sans se heurter à un dépassement du gabarit pour lequel il faut évidemment tenir compte de l'incidence sur le comportement de la citerne dans les courbes du parcours suivi par cette citerne.

Pour tenter de remédier à cet inconvinient, on connaît une citerne (FR-A 1 585 873) dont les parois extrêmes sont pourvues de moyens complexes permettant de leur donner une pente variable afin d'être adaptable au produit spécifique à diriger vers les trémies, quant à elles classiques.

Seules les parois extrêmes bénéficent de la pente choisie et délimitent à leur jonction avec les parois longitudinales des creux favorisant malheureusement la retention du produit.

Pour tenter de remédier à cet inconvénient, il est connu (FR-A 2 446 207) de remplacer l'écoulement par simple gravité par un écoulement forcé qui permet alors de donner à la trémie des génératrices ayant une pente quasiment nulle; le gain en hauteur qui en résulte permet de descendre très bas le fond de la citerne et donc de gagner en capacité.

Toutefois pour que cet écoulement soit pulsé, il est alors nécessaire de placer, à la base du corps, à l'intérieur de la citerne des tamis légèrement inclinés vers l'orifice de sortie, et d'insuffler de l'air sous ces tamis, pour assurer la fluidisation des produits qi sont au contact des tamis et leur transport vers ledit orifice de sortie.

Complètement logés à l'intérieur de la citerne et, s'étendant tout au long de celle-ci, ces tamis et les moyens d'insufflation d'air sous toute leur surface sont complexes à mettre en place et peu accessibles pour l'entretien.

En outre, assurant sans le concours de la pesanteur l'écoulement du produit stocké, et ce en même temps sur toute la longueur de la citerne, ces moyens d'insufflation doivent être très puissants et importants et sont donc très coûteux et encombrants.

Un résultat que l'invention vise à obtenir est une réceptacle du type cité plus haut qui en évitant leurs inconvénients, allie les avantages des citernes à écoulement par simple gravité et ceux des citernes à écoulement forcé.

A cet effet, l'invention a pour objet un réceptacle du type précité comprenant au moins une trémie notamment caractérisé:

– en ce que la trémie a une section horizontale de forme oblongue dont le grand axe est parallèle à l'axe longitudinal du réceptacle,

– en ce que la paroi latérale de cette trémie présente en tout point autour de la dite trémie une pente au moins sensiblement constante vers l'orifice de sortie et,

– en ce que la dite paroi latérale de cette trémie présente:

– d'une part, écartées l'une de l'autre d'une certaine distance, deux parties sensiblement semi-coniques de pente, dont les concavités sont tournées l'une vers l'autre, et

– d'autre part, deux parois planes de largeur correspondant à la distance entre les parties sensiblement semi-coniques dont elles joignent les génératrices extrêmes pour réaliser les côtés longitudinaux de la section horizontale oblongue de la trémie. Elle a également pour objet le véhicule pourvu d'au moins un tel réceptacle.

L'invention sera bien comprise à l'aide de la description ci-après faite à titre d'exemple non limitatif en regard du dessin ci-annexé qui représente schématiquement:

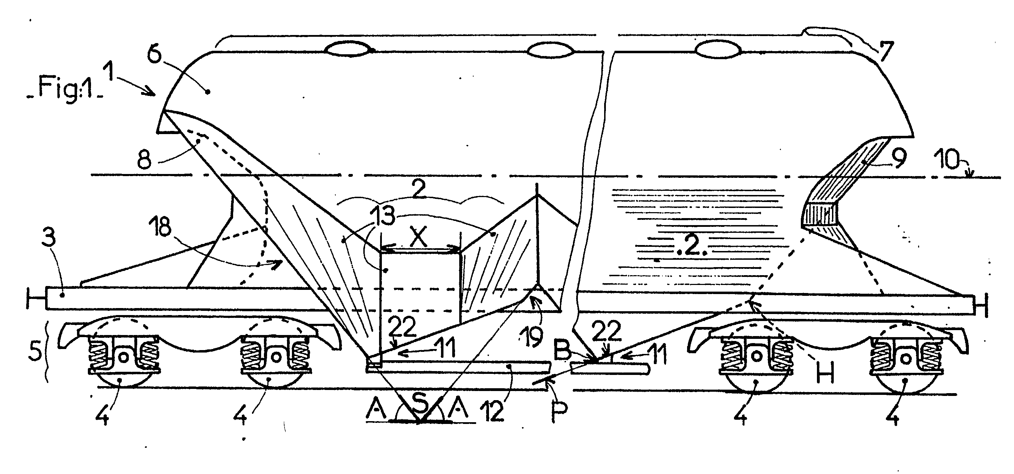

– figure 1: un wagon-citerne vu de profil,

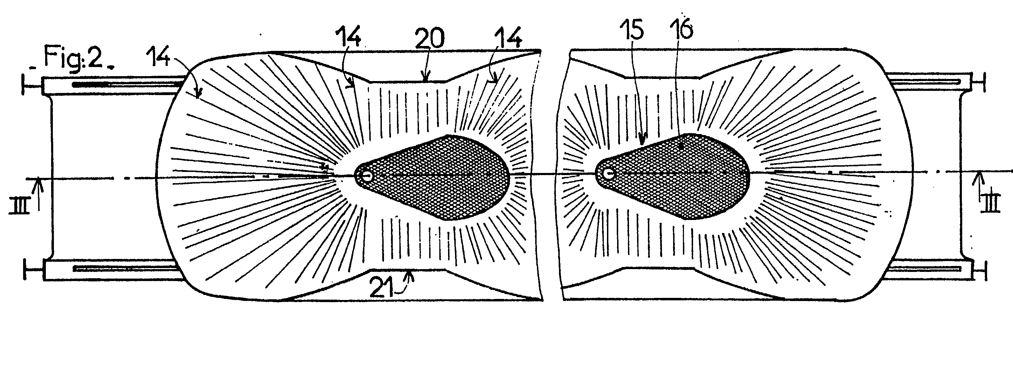

– figure 2: un wagon-citerne vu de dessus,

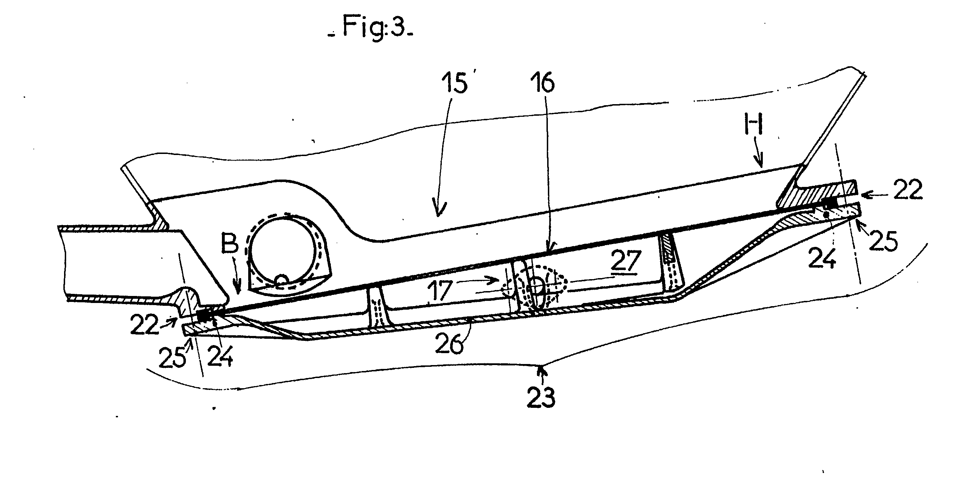

– figure 3: une coupe partielle selon III–III de la figure 2.

En se reportant au dessin, on voit que le réceptacle de stockage 1, ici une citerne, est pourvu de trémies de déchargement 2 et repose, par l'intermédiaire d'un châssis 3, sur les organes de roulement 4 d'un véhicule 5, tels les boggies d'un wagon.

Le corps 6 du réceptacle 1a, dans sa partie essentielle 7, une forme générale cylindrique, d'axe horizontal, fermée à ses extrémités par des calottes bombées 8, 9, par exemple sensiblement hémisphériques, donnant audit corps 6 du réceptacle une section horizontale de forme oblongue dont l'axe longitudinal 10 est généralement parallèle à la direction de déplacement du véhicule.

Les trémies 2 sont raccordées à la base du corps 6 pour que le produit qui descend par gravité soit canalisé vers des orifices de sortie 11 par lesquels les trémies 2 sont raccordées à une canalisation de vidange 12.

Ces trémies 2 ont une forme évasée dont la partie la plus large est située à la leur partie supérieure tandis que la partie la plus étroite se situe du côté de l'orifice de sortie 11.

Elles comprennent une paroi 13 dont toutes les génératrices 14 ont une pente A d'au moins cinquante degré environ.

Le réceptacle est en outre pourvu de moyens de fluidisation 15 comprenant de manière connue au moins un tamis 16 sur lequel le produit appuie par son propre poids et sous lequel des moyens 17 insufflent de l'air conduisant les produits vers la canalisation de vidange 12.

Selon une caractéristique de l'invention, chaque trémie 2 a une section horizontale de forme oblongue dont le grand axe est parallèle à l'axe longitudinal 10 du réceptacle 1 et la paroi latérale 13 de cette trémie présente, d'une part, écartées l'une de l'autre d'une certaine distance X, deux parties sensiblement semi-coniques 18, 19 de pente A, dont les concavités sont tournées l'une vers l'autre, et, d'autre part, deux parois planes 20, 21 de largeur correspondant à la distance X entre les parties sensiblement semi-coniques dont elles joignent les génératrices extrêmes pour réaliser les côtés longitudinaux de la section horizontale oblongue de la trémie.

Grâce à cette forme oblongue dont le grand axe est parallèle à l'axe longitudinal du réceptacle, cette trémie peut se raccorder avec le corps du réceptacle de manière telle que, dans sa partie inférieure, en tous points autour de la trémie, le corps présente, vers l'orifice de sortie, une pente au moins sensiblement constante en continuité avec celle de la paroi de la trémie tant dans les parties où elle se raccorde à la partie cylindrique du corps que dans les parties où la trémie se raccorde à une partie bombée du corps.

Dans le cas où la citerne comporte plusieurs trémies, pour assurer la vidange de tout le réceptacle, les trémies doivent évidemment, avoir leurs entrées qui se succèdent pratiquement sans intervalle.

Quoiqu'il en soit, augmentant l'entrée de la trémie dans la direction longitudinale du réceptacle, cette forme oblongue permet donc de réduire le nombre de trémies nécessaires pour équiper le réceptacle.

Elle permet en outre d'utiliser l'espace habituellement perdu entre les pointes des cônes des trémies classiques.

Au lieu:
– d'une part, que les parties sensiblement semi-coniques 18, 19 s'étendent toutes deux sur une même hauteur et ce pratiquement jusqu'à leur sommet S tandis que les deux parois planes 20, 21 auraient alors une hauteur constante égale aux génératrices 14 de ces parties sensiblement semi-coniques 18, 19 et
– d'autre part, que le bord inférieur 22 de la trémie réalise directement l'orifice 11 se raccordant à la canalisation de vidange 12, tandis que les moyens de fluidisation seraient logés à l'intérieur du réceptacle,

Selon un autre caractéristique de l'invention:
– d'une part, les deux parois planes 20, 21 et au moins l'une des parties semi-coniques 18, 19 sont interrompues à leur base à leur intersection par un plan P incliné de manière telle que le point le plus bas B et le point le plus haut H du bord inférieur 22 de la paroi 13 de la trémie 2 se situent respectivement aux points opposés de l'intersection du bord inférieur 22 avec le plan vertical passant par l'axe longitudinal 10 de la trémie 2 et
– d'autre part c'est sous ce bord inférieur 22 de la paroi 13 de la trémie 2 que sont appuyés les moyens de fluidisation 15 par l'intermédiaire desquels la trémie 2 est raccordée à la canalisation de vidange 12.

Les dispositions qui précèdent permettent d'améliorer les performances et les caractéristiques des véhicules de transport. Alors qu'habituellement, les trémies des véhicules de transport sont de formes coniques ou pyramidales, la particularité de la présente trémie de réception est d'associer la trémie du type pyramidale à celle du type conique.

Cette disposition a l'avantage de garantir un angle d'écoulement périphérique constant jusqu'aux moyens de fluidisation tout en assurant une augmentation de capacité utile relative à l'espace entre les parties sensiblement semi-coniques.

Cette disposition permet en outre d'incliner judicieusement le plan du tamis des moyens de fluidisation afin d'assurer une vidange totale des produits pulvérulents, par un ou plusieurs orifices de sortie, situés à la base de l'un des demi-cônes.

Dans une forme préférée de réalisation, ces moyens de fluidisation 15 se présentent sous la forme d'un plateau porteur 23 possédant globalement la forme d'une cuvette dont le bord 24 est prolongé d'une collerette périphérique 25 coopérant avec le bord inférieur 22 de la trémie 2.

Le tamis 16 supportant le produit est maintenu à sa périphérie par pincement entre ces deux éléments précités 22, 25.

En outre, afin de bénéficier d'un encombrement réduit, la base 26, sensiblement horizontale, du plateau porteur 23 jouxte le point le plus bas B précédemment énoncé.

L'alimentation en air du dispositif de fluidisation 15 s'effectue au travers de la paroi latérale 27 du plateau porteur 23 par le biais d'un dispositif pneumatique fixé à demeure sur le dit plateau et, de ce fait, facilement accessible pour l'entretien.

Celui-ci permet de créer à l'intérieur du volume délimité par le plateau 23 et le tamis 16 une surpression provoquant au travers du tamis 16 un écoulement, de l'air qui conduira les produits vers la canalisation de vidange 12.

Différentes sorties sont géométriquement possibles.

Cette conception de la trémie apporte des avantages au niveau de l'amélioration des caractéristiques générales des véhicules aptes au transport de produits pulvérulents vidangés par un système pneumatique.

Pour un volume ou une capacité utiles donnés, par exemple de quatre vingt mètres cubes, cette forme de trémie permet:
– une diminution du nombre de trémies (trois au lieu de quatre),
– une diminution de la longueur des réceptacles (environ un mètre) par récupération des espaces entre cônes habituellement non utilisés,
– une diminution du nombre et de l'importance des moyens nécessaires tant à l'alimentation en air qu'à la sortie du produit (trois trémies et trois moyens de fluidisation au lieu de quatre).

Cette forme permet aussi:
– une standardisation dimensionnelle des trémies tout en assurant la polyvalence de cet équipement au transport de produits pulvérulents divers, chimiques ou alimentaires, en raison de l'homogénéité des parois favorisant en outre l'éventuelle application de revêtements intérieurs,
– une standardisation des moyens de fluidisation, les mêmes moyens restant valables pour tous produits qu'ils soient faciles ou difficiles à fluidiser,
– und diminution au niveau des caractéristiques des véhicules de la perte de charge dans les proportions du gain en nombre de trémies et donc en moyens de fluidisation, d'où une vitesse de déchargement améliorée et un temps de vidange diminué,
– un meilleur écoulement du produit transporté dû au déséquilibre du produit en raison de la surface plane située entre les demi-cônes.

**Revendications**

1. Réceptacle (1) comprenant:
– un corps (6) de section horizontale oblongue d'axe longitudinal (10) qui, plus particulièrement mais non exclusivement, dans sa partie essentielle, a une forme générale cylindrique d'axe horizontal, fermé à ses extrémités par des calottes bombées, par exemple sensiblement hémisphériques, à la base duquel corps (6) est raccordée la paroi latérale (13) d'au moins une trémie (2) qui, pour canaliser le produit contenu dans le réceptacle (1) jusqu'à un orifice de sortie (11) raccordé à une canalisation de vidange (12), a une forme évasée dont la partie la plus large est situé à sa partie supérieure, tandis que sa partie la plus étroite se situe du côté de l'orifice de sortie (11), et
– des moyens de fluidisation (15), dont un tamis (16) sur lequel le produit appuie par son propre poids et sous lequel des moyens (17) insufflent de l'air traversant le tamis et conduisant les produits vers la canalisation de vidange (12),
ce receptacle étant caractérisé:
– en ce que la trémie (2) a une section horizontale de forme oblongue dont le grand axe est parallèle à l'axe longitudinal (10) du réceptacle (1),
– en ce que la paroi latérale de cette trémie présente en tout point autour de la dite trémie une pente au moins sensiblement constante vers l'orifice de sortie et,
– en ce que la dite paroi latérale (13) de cette trémie présente:
– d'une part, écartées l'une de l'autre d'une certaine distance (X), deux parties sensiblement semi-coniques (18, 19) de pente (A), dont les concavités sont tournées l'une vers l'autre, et
– d'autre part, deux parois planes (20, 21) de largeur correspondant à la distance (X) entre les parties sensiblement semi-coniques dont elles joignent les génératrices extrêmes pour réaliser les côtés longitudinaux de la section horizontale oblongue de la trémie.

2. Réceptacle selon la revendication 1 caractérisé en ce que:
– d'une part, les deux parois planes (20, 21) et au moins l'une des parties sensiblement semi-coniques (18, 19) sont interrompues à leur base à leur intersection avec un plan (P) incliné de manière telle que le point le plus bas (B) et le poit le plus haut (H) du bord inférieur (22) de la paroi (13) de la trémie (2) se situent respectivement aux points opposés de l'intersection du bord inférieur (22) avec le plan vertical passant par l'axe longitudinal (10) de la trémie (2) et
– d'autre part c'est sous ce bord inférieur (22) de la paroi (13) de la trémie (2) que sont appuyés les moyens de fluidisation (15) par l'intermédiaire desquels la trémie (2) est raccordée à la canalisation de vidange (12).

3. Réceptacle selon la revendication 1 ou 2 caractérisé en ce que les moyens de fluidisation (15) se présentent sous la forme d'un plateau porteur (23) possédant globalement la forme d'une cuvette dont le bord (24) est prolongé d'une collerette périphérique (25) coopérant avec le bord inférieur (22) de la trémie (2).

4. Réceptacle selon la revendication 3 caractérisé en ce que le tamis (16) supportant le produit est maintenu à sa périphérie par pincement entre la collerette périphérique (25) et le bord inférieur (22) de la trémie.

5. Réceptacle selon la revendication 3 ou 4 caractérisé en ce qu'afin de bénéficier d'un encombrement réduit, la base (26), sensiblement horizontale, du plateau porteur (23) jouxte le point le plus bas (B).

6. Réceptacle selon la revendication 5 caractérisé en ce que l'alimentation en air du dispositif de fluidisation (15) s'effectue au travers de la paroi latérale (27) du plateau porteur (23) par le biais d'un dispositif pneumatique fixé à demeure sur le dit plateau.

7. Véhicule et notamment wagon-citerne caractérisé en ce qu'il comprend au moins un réceptacle selon l'une quelconque des revendications 1 à 6.

## Patentansprüche

1. Behälter (1), enthaltend:
– einen Baukörper (6) von länglichem Horizontalschnitt an der Längsachse (10), welcher insbesondere, aber nicht ausschließlich, in seinem wesentlichen Teil eine allgemein zylindrische Form mit senkrechter Achse hat, an seinen Enden durch ausgebauchte Kappen, z.B. im wesentlichen halbkugelförmige, verschlossen ist, wobei an der Grundfläche des Baukörpers (6) die Seitenwand (13) mindestens mit einem Trichterbunker (2) zum Ableiten des in dem Behälter (1) enthaltenen Produkts zu einer Ausgangsöffnung (11) verbunden ist, die an eine Entleerungsleitung (12) angeschlossen ist, mit einer konisch erweiterten Form, deren größter Teil an ihrem oberen Teil gelegen ist, während der schmalste Teil an der Seite der Ausgangsöffnung (11) gelegen ist,
– eine Fluidisations-Einrichtung (15), auf deren Sieb (16) das Produkt durch sein Eigengewicht aufliegt und unter der eine Einblas-Einrichtung (17) Luft durch das Sieb bläst und die Produkte gegen die Entleerungsleitung (12) führt, dadurch gekennzeichnet,
– daß der Trichterbunker (2) einen waagerechten Abschnitt von länglicher Form hat, dessen Hauptachse zur Längsachse (10) des Behälters (1) parallel verläuft,
– daß die Seitenwand dieses Trichterbunkers an jedem Punkt um den besagten Trichterbunker herum eine gegenüber der Ausgangsöffnung im wesentlichen konstante Neigung bildet, und
daß die besagte Seitenwand (13) dieses Trichterbunkers aufweist:
– einerseits zwei im wesentlichen halbkonische Teile (18, 19) mit der Neigung (A), deren Ausbuchtungen zueinander gewandt und voneinander in einem gewissen Abstand (X) beabstandet sind,
– andererseits zwei ebene Wände (20, 21) von einer Größe, die der Entfernung (X) zwischen den im wesentlichen halbkonischen Teilen entspricht, von denen sie die äußeren Mantellinien verbinden, um die Längsseiten des länglichen waagerechten Abschnitts des Trichterbunkers zu bilden.

2. Behälter nach Anspruch 1, dadurch gekennzeichnet, daß
– einerseits die zwei Ebenen (20, 21) und mindestens eines der im wesentlichen halbkonischen Teile (18, 19) unterbrochen sind an ihrer Grundfläche ihrer Schnittlinie mit einer Ebene (P), die in der Weise geneigt ist, daß der tiefste Punkt (B) und der höchste Punkt (H) des unteren Randes der Seitenwand (13) des Trichterbunkers (2) jeweils an gegenüberliegenden Punkten des Schnitts des unteren Randes (22) mit der senkrechten Ebene, die durch die Längsachse (10) des Trichterbunkers (2) geht, gelegen ist, und

– andererseits unter diesem unteren Rand (22) der Seitenwand (13) des Trichterbunkers (2) Fluidisations-Einrichtungen (15) befestigt sind, mittels derer der Trichterbunker mit der Entleerungsleitung (12) verbunden ist.

3. Behälter nach Anspruch 1 oder 2, dadurch gekennzeichnet, daß die Fluidisations-Einrichtung (15) ausgestaltet ist in Form einer Tragplatte (23), die allgemein die Form einer Schale besitzt, deren Rand (24) verlängert ist zu einem Randflansch (25), der mit dem unteren Rand (22) des Trichterbunkers (2) zusammenwirkt.

4. Behälter nach Anspruch 3, dadurch gekennzeichnet, daß das Sieb, welches das Produkt trägt, an seinem Umfang durch Quetschung zwischen dem Randflansch (25) und dem unteren Rand (22) des Trichterbunkers gehalten wird.

5. Behälter nach Anspruch 3 oder 4, dadurch gekennzeichnet, daß zur Verringerung des Raumbedarfs die im wesentlichen waagerechte Grundfläche (26) der Tragplatte (23) mit dem tiefsten Punkt (B) verbunden ist.

6. Behälter nach Anspruch 5, dadurch gekennzeichnet, daß die Luftversorgung der Fluidisations-Einrichtung (15) durch die Seitenwand (27) der Tragplatte (23) erfolgt durch die Neigung einer fest an besagter Platte befestigten pneumatischen Vorrichtung.

7. Fahrzeug und insbesondere Behälterwaggon, dadurch gekennzeichnet, daß es mindestens einen Behälter nach irgendeinem der Ansprüche 1 bis 6 enthält.

## Claims

1. Receptacle (1) comprising:
a body (6) having an oblong horizontal section with a longitudinal axis (10) which, more particularly but not exclusively, in its essential part, has a general cylindrical shape with a horizontal axis, which is closed at its ends by dished caps which are, for example, substantially hemispherical, and at the base of which body (6) there is connected the lateral wall (13) of at least one funnel (2) which, to channel the product contained in the receptacle (1) to an outlet orifice (11) connected to a drainage conduct (12), has a flared shape of which the widest portion is situated at its upper portion while its narrowest portion is situated on the side of the outlet orifice (11), and fluidisation means (15) comprising a sieve (16) on which the product rests with its inherent weight and beneath which some means (17) blow in air traversing the sieve and conveying the products to the drainage conduit (12), the receptacle being characterized
in that the funnel (2) has a horizontal section of oblong shape of which the large axis is parallel to the longitudinal axis (10) of the receptacle (1),
in that the lateral wall of the funnel has, right round said funnel, an inclination which is at least substantially constant toward the outlet orifice and in that said lateral wall (13) of the funnel has:

on the one hand, mutally spaced by a certain distance (X), two substantially semi-conical portions (18, 19) of inclination (A), of which the concavities face one another, and

on the other hand, two plane walls (20, 21) having a width corresponding to the distance (X) between the substantially semi-conical portions whose extreme generatrices they join to produce the longitudinal sides of the oblong horizontal section of the funnel.

2. Receptacle according to claim 1, characterized in that:

on the one hand, the two plane walls (20, 21) and at least one of the substantially semi-conical portions (18, 19) are interruped at their base at their intersection with an inclined plane (P) such that the lowest point (B) and the highest point (H) of the lower edge (22) of the wall (13) of the funnel (2) are respectively situated at the opposing points of the intersection of the lower edge (22) with the vertical plane passing through the longitudinal axis (10) of the funnel (2) and

on the other hand, the fluidisation means (15) by means of which the funnel (2) is connected to the drainage conduit (12) are supported beneath this lower edge (22) of the wall (13) of the funnel (2).

3. Receptacle according to claim 1 or 2, characterized in that the fluidisation means (15) have the form of a carrying tray (23) having the overall shape of a basin of which the edge (24) is extended by a peripheral flange (25) co-operating with the lower edge (22) of the funnel (2).

4. Receptacle according to claim 3, characterized in that the sieve (16) supporting the product is held at its periphery by clamping between the peripheral flange (25) and the lower edge (22) of the funnel.

5. Receptacle according to claim 3 or 4, characterized in that, in order to benefit from reduced bulk, the substantially horizontal base (26) of the carrying tray (23) is contiguous to the lowest point (B).

6. Receptacle according to claim 5, characterized in that the fluidisation device (15) is supplied with air through the lateral wall (27) of the carrying tray (23) through the slant of a pneumatic device permanently fixed on said tray.

7. Vehicle and, in particular, tanker, characterized in that it comprises at least one receptacle according to any one of claim 1 to 6.

Fig.1

Fig.2.

14  14  20  14  15  16

21

EP 0 262 035 B1

Fig.3.